# EUROPÄISCHE PATENTSCHRIFT

(11) **EP 1 246 679 B1**
(45) Veröffentlichungstag und Bekanntmachung des Hinweises auf die Patenterteilung: **21.12.2005**
(21) Anmeldenummer: 01909599.1
(22) Anmeldetag: 10.01.2001
(51) Int. Cl.: B01D 29/07

(54) **VERFAHREN ZUR ÜBERWACHUNG EINES FILTERELEMENTS**
METHOD FOR MONITORING A FILTER ELEMENT
PROCEDE POUR SURVEILLER UN ELEMENT DE FILTRATION

(30) Priorität: 10.01.2000 DE 10000435
(43) Veröffentlichungstag der Anmeldung: 09.10.2002
(73) Patentinhaber: Mann + Hummel GmbH, 71638 Ludwigsburg (DE)
(72) Erfinder: WOLF, Michael, 66539 Neunkirchen (DE); THALMANN, Christian, 67346 Speyer (DE); PLÜCKER, Volker, 76698 Ubstadt-Weiher (DE); OBERDORFER, Torsten, 67105 Schifferstadt (DE); DWORATZEK, Klemens, 68535 Edingen-Mhu. (DE); ESCHER, Horst, 71679 Asperg (DE); FRANZ, Andreas, 70806 Kornwestheim (DE); PELZ, Andreas, 71706 Markgröningen (DE)
(74) Vertreter: Voth, Gerhard
(86) Internationale Anmeldenummer: PCT/EP2001/000233
(87) Internationale Veröffentlichungsnummer: WO 2001/052185

(56) Entgegenhaltungen:
- WO-A-00/40322
- DE-A- 4 402 836
- DE-A- 19 627 595
- US-A- 5 192 424
- US-A- 5 674 381

## Beschreibung

Die Erfindung betrifft ein Verfahren zur Überwachung eines Filterelements, nach der Gattung des Verfahrensanspruchs.

Die Überwachung von wartungsintensiven Austauschteilen ist bei vielen Anwendungen notwendig. Beispielsweise bei diversen Maschinen und Anlagen und insbesondere im Kraftfahrzeug befinden sich in verschiedensten Applikationen Filter und ähnliche Elemente zur Luft-, Flüssigfiltration oder z.B. auch zur Luftentölung. Die Filteranordnungen sind zumeist mit Filterelementen versehen, welche wiederum eine definierte Lebensdauer haben und regelmäßig im Zuge von Wartungsarbeiten ausgetauscht werden.

Aus der DE 44 02 836 A1 ist beispielsweise bekannt, dass zumindest die richtige Verwendung geeigneter Austauschteile dadurch gewährleistet wird, dass das jeweilige Anbauteil nur nach dem Schloss-Schlüsselprinzip an das Aggregat anfügbar ist. Es besteht hier jedoch immer noch das Problem, dass eine ev. noch mögliche unsachgemäße Nutzung von Austauschteilen dazu führen kann, dass die Lebensdauer oder die Funktion der Aggregate herabgesetzt wird. Hierbei lassen sich dann die unsachgemäße Nutzung oder die Folgen nur sehr schwer oder gar nicht nachweisen und eine Fehlerbehebung ist relativ schwer.

Aus der DE-A-198 22 751 ist ein System und ein Verfahren zur Identifizierung von Zubehör-Hilfs- und/oder Betriebsstoffen für technische Geräte bekannt. Hierzu sind die Hilfs- oder Betriebsstoffe mit einem Datenträgerabschnitt versehen auf dem für das menschliche Auge erkennbar und für einen menschlichen Betrachter unterscheidungskräftige Informationen gespeichert sind. Das technische Gerät ist mit einer Lese und Auswertevorrichtung für diese Information versehen.

Es ist weiterhin aus der DE-A-198 12 480 ein Tintenstrahldrucker bekannt. Bei diesem weist die Vorratsflasche eine Kennzeichnung auf, die ein verschlüsselte Infonnation über die in ihr enthaltene Flüssigkeit, zum Beispiel Verfallsdatum, Art der Flüssigkeit usw. enthält.

Eine aktive Informationsver- bzw. Bearbeitung ist aus dem Stand der Technik nicht zu entnehmen.

Aus der DE-A-196 27 595 ist ein Filter mit einer Filterpatrone zu entnehmen, wobei diese Filterpatrone eine Speichereinrichtung umfasst, welcher eine Folge elektronisch lesbarer Informationen enthält. Die Speichereinrichtung ist ein Festwertspeicher und umfasst einen Sender zum Senden eines die Folge von Informationen umfassenden elektrischen Signals.

### Aufgabenstellung

Der Erfindung liegt die Aufgabe zugrunde, ein Verfahren und eine Vorrichtung zur Überwachung wartungsintensiver Austauschteile an einem Aggregat, zu schaffen, bei dem auf einfache Weise eine Kontrolle der sachgemäßen Funktion möglich ist.

### Vorteile der Erfindung

Die gestellte Aufgabe wird in vorteilhafter Weise mit den Merkmalen des Hauptanspruchs gelöst. Erfindungsgemäß erfolgt eine Überwachung wartungsintensiver Austauschteile an einem Aggregat dadurch, dass die physikalischen Eigenschaften und/ oder Funktionen oder sonstige spezifizierende Daten des Austauschteils im und/oder am Austauschteil auf einem geeigneten Speicherbaustein hinterlegt werden.

Mit einem geeigneten Lesemittel können dann auf einfache Weise die Daten zu vorgegebenen Zeitpunkten oder in vorgegebenen Zeitintervallen in eine Auswerteeinheit eingelesen werden. In besonders vorteilhafter Weise können dann die eingelesenen Daten in der Auswerteeinheit mit vorgegebenen Daten verglichen werden und nach einer Auswertung des Vergleichs der Daten ist eine Beeinflussung der Funktionen des Austauschteils und/oder des Aggregats durchführbar. Alternativ dazu können die eingelesenen Daten in der Auswerteeinheit auch mit vorgegebenen Daten verglichen werden. Nach einer Auswertung des Vergleichs der Daten wird eine Speicherung des Ergebnisses durchgeführt.

Das erfindungsgemäße Zusammenspiel von Speicherung, Auslesen und Auswerten von Daten sowie ggf. eine Steuerung ermöglichen in vorteilhafter Weise, dass z.B. bei einer Erkennung einer sachgemäßen Anwendung eines geeigneten Austauschteils ein Aggregat anfahren kann oder im Gegensatz hierzu blockiert, falls dies nicht erkannt wird. Darüber hinaus oder statt dessen kann auch die Weitergabe eines sog "Fehler-Merkers" an eine übergeordnete Steuerung erfolgt, so dass der unsachgemäße Einsatz eines Austauschteil zumindest registriert wird.

Bei der Erfindung sind die wartungsintensiven. Austauschteile Filterelemente, zum Beispiel an einem Verbrennungsmotor eines Kraftfahrzeuges, die nach einem vorgegebenen Zeitraum oder einer Beeinträchtigung ihrer Funktion entfernt und erneuert werden.

Erfindungsgemäß ist bei einer besonders vorteilhaften Vorrichtung zur Durchführung des zuvor beschriebenen Verfahren am Austauschteil ein elektronisches Halbleiterbauteil mit einem geeigneten Speicherelement für die Daten angebracht. Eine Integration eines elektronischen Chips als Halbleiterbauelement im Filterelement kann beispielsweise in der Nähe einer Wand erfolgen, wobei dann eine Auswerte- und/oder Steuereinheit in der Nähe angebracht werden kann. Die Integration des Chip könnte z.B. aber auch auf dem Befestigungsflansch oder in der Leimkammer des Filterelements erfolgen.

In vorteilhafter Weise kann auch das Lesegerät oder der Speicherbaustein mit einer Übertragungseinheit versehen sein, mit der die am Austauschteil erfasste oder gelesenen Daten, vorzugsweise berührungslos, zu einer Kontrolleinheit übertragbar sind.

Eine solche Übertragungseinheit ist ein sogenannter Transponder mit integrierter Antenneneinheit, welcher in der Lage ist, Daten mehrere Meter weit zu übertragen. Solche Systeme basieren somit auf einer berührungsloser Energie- und Datenübertragung. Hiermit können auch auf einfache Weise eine Vielzahl von Daten, die die Funktion des Austauschteils und/oder des Aggregats betreffen übertragen werden. Somit können beispielsweise auch Sensoren für Druck, Temperatur, Feuchte, Restölgehalt oder sonstiges beispielsweise in einen Chip am Austauschteil integriert werden.

Übliche Transponder bestehen normalerweise aus einer Spule und einem Schwingkreis, wobei an dem Schwingkreis ein oder mehrere Sensoren der beschriebenen Art angeordnet sind. Die Transponder können sowohl aktive Identifikationssysteme sein als auch passive, dass heißt batterielose Datenträger. Die Übertragung der Daten zu einer Basisstation erfolgt dadurch, dass die Basisstation eine bestimmte Schwingfrequenz erzeugt und durch den Transponder eine Verstimmung der Frequenz verursacht wird. Diese Veränderung steht im Zusammenhang mit dem gemessenen Signal des jeweils an dem Transponder angeordneten Sensors. Die Übertragung von dem Transponder zur Basisstation kann bei einem passiven System über eine Distanz von bis zu 100 cm erfolgen, bei aktiven oder semiaktiven Systemen erfolgt eine Übertragung über wesentlich größere Distanzen.

Gemäß einer Ausgestaltung der Erfindung, können die Daten von dem Transponder zu der Basisstation verschlüsselt erfolgen. Das Verschlüsselungsschema ist dabei variabel. Es besteht die Möglichkeit, mit einer Basisstation mehrere Transponder auszuwerten. Dies hat vor allem dann einen wesentlichen Vorteil, wenn eine Vielzahl von wartungsintensiver Austauschteile überwacht werden soll. Die Auswertung erfolgt beispielsweise im Multiplexverfahren.

Bei der Messung eines Differenzdruckes ist es gemäß einer Ausgestaltung der Erfindung zweckmäßig, einen einzigen Transponder an der Schnittstelle zwischen den beiden Drücken anzuordnen. Besonders bei der Überwachung von Austauschteilen oder von Komponenten eines Fahrzeuges ist es sinnvoll, die Transponder durch eine einzige Basisstation, die in der Nähe der Transponder, angeordnet ist, auszuwerten. Die von den einzelnen Sensoren ermittelten Daten sollen nicht nur im Fahrzeug zur Verfügung gestellt werden, sondern auch in einer zentralen Leitstelle der Fahrzeuge. Hier sieht die Erfindung in einer weiteren Ausgestaltung vor, diese Daten über ein Satelittennavigationssystem oder über Mobilfunk an die Leitstelle zu übertragen und von der Leitstelle Informationen an das Fahrzeug bzw. den Fahrzeugführer zurückzusenden.

Diese und weitere Merkmale von bevorzugten Weiterbildungen der Erfindung gehen außer aus den Ansprüchen auch aus der Beschreibung und den Zeichnungen hervor.

### Zeichnung

Ausführungsbeispiele einer erfindungsgemäßen Vorrichtung zur Durchführung eines Verfahren zur Überwachung wartungsintensiver Austauschteile an einem Aggregat werden anhand der Figuren erläutert.
- Figur 1: eine Ansicht eines Filterelements mit einem Speicherbaustein,
- Figur 2: den schematischen Aufbau eines Transponders,
- Figur 3: einen Transponder in einer Detaildarstellung,

### Beschreibung von Ausführungsbeispielen

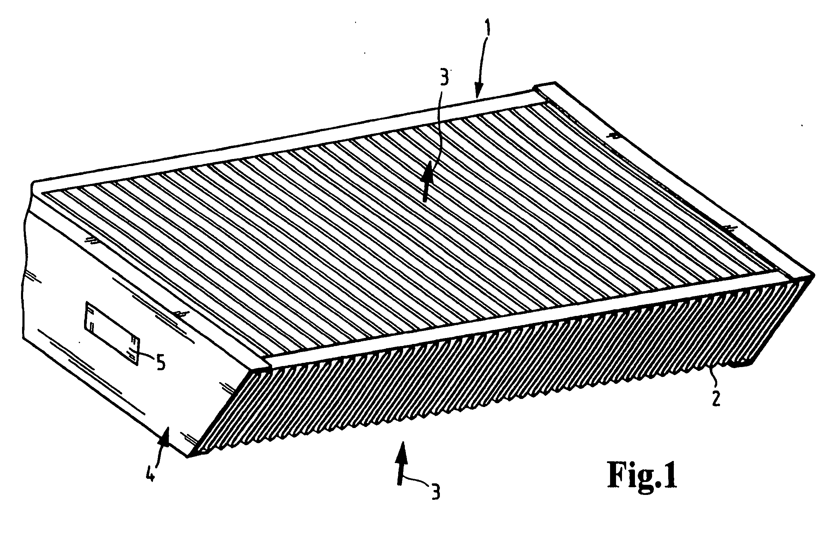

In Figur 1 ist schematisch ein Luftfilterelement 1 als Austauschteil gezeigt, dass mit Filterlagen 2 zur Filterung der Ansaugluft gemäß der Pfeile 3 an einen Verbrennungsmotor anfügbar ist. An einer Kunststoffwand 4 des Filterelements 1 ist ein Speicherbaustein 5 angebracht.

Der Speicherbaustein 5 kann hier ein auch aktives elektronisches Halbleiterbauteil, ein sog. Chip, sein, der mit geeigneten Speicherelementen für die Daten ausgeführt ist. Eine Integration dieses elektronischen Chips in das Filterelement 1 erfolgt an der Kunststoffwand 4, damit eine hier nicht dargestellte Lese- Auswerte- und/oder Steuereinheit in der Nähe angebracht werden kann. Der Speicherbaustein 5 kann auch ein Barcodefeld, ein Hologramm oder ein Magnetstreifen als Speicherelement aufweisen.

Zusätzlich kann beispielsweise der Chip als Speicherbaustein 5 so ausgeführt sein dass in Erweiterung des dargestellten Ausführungsbeispiels die Leseeinheit mit einer Übertragungseinheit versehen ist, mit der die am Filterelement 1 gelesenen Daten, vorzugsweise berührungslos, zu der Kontrolleinheit übertragbar sind.

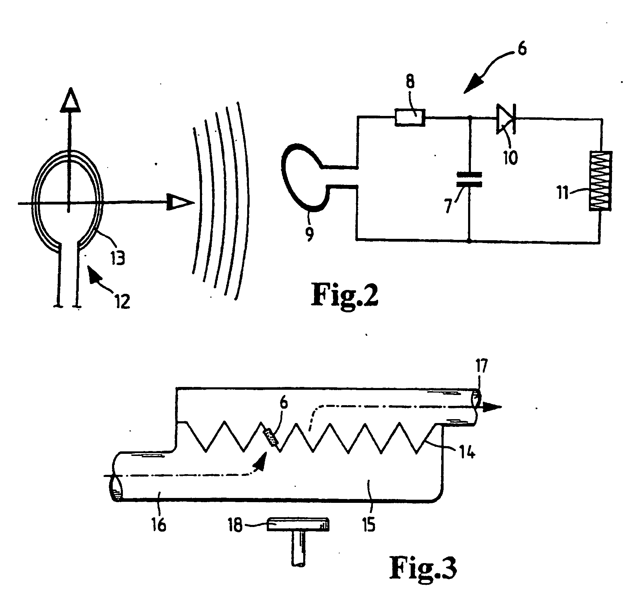

In Figur 2 ist der schematische Aufbau einer Energieübertragung in passiven Transpondersystemen dargestellt. Der Transponder 6 besteht aus einem Schwingkreis mit einem Kondensator 7, einem ohmschen Widerstand 8 und einer Spule 9. Über eine Gleichrichterdiode 10 ist ein Sensor, beispielsweise ein Dehnungsmeßstreifen 11 angeschlossen. Bei dem Transponder handelt es sich um ein passives Bauteil. Die Aktivierung des Transponders erfolgt über die Basisstation. Diese Basisstation 12 weißt eine Antenne 13 auf. Das elektromagnetische Feld der Antenne 13 wird durch den Schwingkreis des Transponders 6 beeinflußt. Diese Beeinflussung wird von der Antenne 13 aufgenommen und als Signal an die Basisstation geleitet. Die Frequenzabweichung, die durch den Schwingkreis des Transponders entsteht, wird in ein elektrisches Signal umgewandelt, das die Veränderung des Dehnungsmeßstreifens 11 wiedergibt. An dem Transponder 6 können unterschiedliche Sensoren, wie beispielsweise auch Temperatursensoren, Feuchtesensoren, Differenzdrucksensoren usw. angeordnet sein. Das Prinzip der Übertragung bleibt dabei unverändert. Selbstverständlich besteht die Möglichkeit, aktive Transponder, das heißt, mit Batteriesystemen versehene Transponder einzusetzen.

Figur 3 zeigt einen Transponder 6 zur Ermittlung des Differenzdrucks. Hierzu ist dieser Transponder an einem zickzack-förmig gefaltetem Filterelement 14 angeordnet. Das Filterelement besteht beispielsweise aus einem Vlies oder aus einem Filterpapier und ist in einem Filtergehäuse 15 angeordnet. Das Filterelement dient zur Filtration von Ansaugluft einer Brennkraftmaschine. Die Ansaugluft strömt über den Rohlufteinlaß 16 in das Filtergehäuse 15, wird von dem Filterelement 14 gereinigt und verläßt über den Reinluftauslaß 17 das Filtersystem. Zur Messung des Verschmutzungsgrades des Filterelements dient üblicherweise eine Differenzdruckmessung. Zur Differenzdruckmessung ist der Transponder 6 unmittelbar an dem Filterelement angeordnet, daß heißt er wird von beiden Seiten mit dem entsprechenden Druck beaufschlagt und mißt beispielsweise über einen Dehnungsmeßstreifen die Druckdifferenz. Das Messsignal wird an die hier schematisch dargestellte Basisstation 18 übertragen.

## Patentansprüche

1. Verfahren zur Überwachung eines Filterelements (1) an einem Aggregat, bei dem
- spezifizierende Daten des Filterelements (1) im und/oder am Filterelement (1) auf einem geeigneten Speicherbaustein (5) hinterlegt werden, wobei der Speicherbaustein ein als induktives Identifikationssytem ausgelegter Transponder ist, welcher die Daten auf eine Basisstation überträgt derart, dass
- mit einem geeigneten Lesemittel die Daten zu vorgegebenen Zeitpunkten oder in vorgegebenen Zeitintervallen in eine Auswerteeinheit eingelesen werden und der Transponder den Verschmutzungsgrad des Filterelementes über den Differenzdruck misst, derart, dass der Transponder (6) unmittelbar an dem Filterelement angeordnet ist und von beiden Seiten mit Druck beaufschlagt wird und die Druckdifferenz über einen Dehnungsmessstreifen misst.

2. Verfahren nach Anspruch 1, **dadurch gekennzeichnet, dass**
- die eingelesenen Daten in der Auswerteeinheit mit vorgegebenen Daten verglichen werden und nach einer Auswertung des Vergleichs der Daten eine Beeinflussung der Funktionen des Austauschteils (1) und/oder des Aggregats durchgeführt wird.

3. Verfahren nach Anspruch 1, **dadurch gekennzeichnet, dass**
- die eingelesenen Daten in der Auswerteeinheit mit vorgegebenen Daten verglichen werden und nach einer Auswertung des Vergleichs der Daten eine Speicherung des Ergebnisses durchgeführt wird.

4. Verfahren nach einem der Ansprüche 1 bis 3, **dadurch gekennzeichnet, dass**
- das Aggregat als Bestandteil eines Kraftfahrzeuges verwendet wird.

5. Verfahren nach einem der vorherigen Ansprüche, **dadurch gekennzeichnet, dass**
- die Übertragung der Daten von dem Speicherbaustein zu geeigneten Lesemitteln verschlüsselt erfolgt, wobei Sende- und Empfangssignale über bestimmte Schlüssel abgestimmt sind.

## Claims

1. Method for monitoring a filter element (1) on an assembly, in which method
- specifying data of the filter element (1) is stored on a suitable storage module (5) in and/or on the filter element (1), wherein the storage module is a transponder, which is in the form of an inductive identification system and which transmits the data to a base station such that,
- using a suitable reading means, the data is read into an evaluation unit at predetermined times or in predetermined time intervals and the transponder measures the degree of contamination of the filter element via differential pressure, such that the transponder (6) is disposed directly on the filter element and is acted upon with pressure from both sides and measures the differential pressure via a foil strain gauge.

2. Method according to claim 1, **characterised in that**
- the data read-in in the evaluation unit is compared with predetermined data and, once the comparison of the data has been evaluated, the actions of the replacement part (1) and/or of the assembly are influenced.

3. Method according to claim 1, **characterised in that**
- the data read-in in the evaluation unit is compared with predetermined data and, once the comparison of the data has been evaluated, the result is stored.

4. Method according to one of claims 1 to 3, **characterised in that**
- the assembly is used as a component part of an automotive vehicle.

5. Method according to one of the preceding claims, **characterised in that**
- the data is transmitted from the storage module to suitable reading means in a coded manner, wherein transmitting signals and receiving signals are determined via specific encryptions.

## Revendications

1. Procédé pour surveiller un élément filtrant (1) dans un agrégat, selon lequel
- des données spécifiques de l'élément filtrant (1) sont entrées sur un élément de mémoire approprié (5) dans et/ou sur l'élément filtrant (1), l'élément de mémoire étant un transpondeur conçu comme un système d'identification inductif qui transmet les données à une station de base, de sorte que
- les données sont lues avec un moyen de lecture approprié à des moments prédéfinis ou à des intervalles de temps prédéfinis dans une unité d'exploitation et que le transpondeur mesure le degré d'encrassement de l'élément filtrant par le biais de la pression différentielle, le transpondeur (6) étant monté directement sur l'élément filtrant et soumis des deux côtés à la pression pour mesurer la différence de pression avec une jauge extensométrique.

2. Procédé selon la revendication 1,
**caractérisé en ce que**
- les données lues sont comparées dans l'unité d'exploitation avec des données prédéfinies et après une exploitation de la comparaison des données, le fonctionnement de la pièce interchangeable (1) et/ou de l'agrégat est influencé.

3. Procédé selon la revendication 1,
**caractérisé en ce que**
- les données lues sont comparées dans l'unité d'exploitation avec des données prédéfinies et après exploitation de la comparaison des données, le résultat est mémorisé.

4. Procédé selon une des revendications 1 à 3,
**caractérisé en ce que**
- l'agrégat est une partie d'un véhicule automobile.

5. Procédé selon une des revendications précédentes,
**caractérisé en ce que**
- la transmission des données de l'élément de mémoire aux moyens de lecture appropriés est codée, les signaux d'émission et de réception étant coordonnés par des codes définis.
